# EUROPÄISCHE PATENTSCHRIFT

(11) **EP 0 858 146 B1**
(45) Veröffentlichungstag und Bekanntmachung des Hinweises auf die Patenterteilung: **16.04.2008**
(21) Anmeldenummer: 98102077.9
(22) Anmeldetag: 06.02.1998
(51) Int. Cl.: H02K 11/00, H02K 5/22

(54) **Netzbetriebener Elektromotor**
Mains-powered electric motor
Moteur électrique alimentée par le secteur

(30) Priorität: 08.02.1997 DE 19704801
(43) Veröffentlichungstag der Anmeldung: 12.08.1998
(73) Patentinhaber: PHOENIX CONTACT GmbH & Co. Kg, 32825 Blomberg (DE)
(72) Erfinder: Schaper, Elmar, 32676 Lügde (DE)
(74) Vertreter: Elbertzhagen, Otto

(56) Entgegenhaltungen:
- EP-A- 0 256 769
- DE-A- 3 332 515
- GB-A- 1 383 830
- US-A- 5 040 381

## Beschreibung

Die Erfindung bezieht sich auf einen netzbetriebenen Elektromotor gemäß den Merkmalen des Oberbegriffs des Patentanspruchs 1.

Aus dem Dokument EP 0 256 769 A1 ist ein Elektromotor in Gestalt eines Schrittschaltmotors bekannt, der an einem Niederspannungsnetz betrieben wird. Zur Steuerung des Elektromotors ist eine Motorschaltstufe vorhanden, an die eine Datenleitung angeschlossen ist, über welche die notwendigen Steuersignale übertragen werden. Ferner ist eine Energieversorgungsleitung vorgesehen, über welche der Elektromotor je nach dem Schaltzustand unmittelbar mit dem Versorgungsnetz verbunden werden kann. Bei Elektromotoren dieser Art erübrigen sich Maßnahmen zur Ableitung der Verlustwärme aus der Motorschaltstufe.

Ein in gleicher Weise an einem Dreiphasen-Wechselstromnetz betriebener Elektromotor geht aus dem Dokument EP 0 351 272 A1 hervor. Hierbei ist ein Überwachungkreis vorgesehen, um mittels Thermosonden eine lokale Erwärmung zu erfassen.

Das Dokument EP 0 577 201 A1 offenbart einen Elektromotor mit einem am Motorgehäuse sitzenden Motoranschlußkasten, in welchem auch die Motorschaltstufe angeordnet ist.

Bei modernen Motoren weist die Motorschaltstufe elektronische Bauteile auf, die Verlustwärme erzeugen, welche über Kühlelemente abgeleitet wird. Der Erfindung liegt die Aufgabe zugrunde, bei einem Elektromotor mit einer derartigen, im Motoranschlußkasten angeordneten Motorschaltstufe die Abwärme der Kühlelemente zur Oberfläche des Elektromotors hin abzuleiten und auch bei höheren Umgebungstemperaturen eine ausreichende Kühlung der Kühlelemente der elektronischen Bauteile sicherzustellen.

Diese Aufgabe wird mit einem netzbetriebenen Elektromotor gelöst, welcher die Gesamtheit der Merkmale des Patentanspruchs 1 aufweist.

Für die Erfindung ist folglich wesentlich, daß die metallische Oberfläche des Elektromotors genutzt werden kann, um die Abwärme der mit Kühlelementen versehenen, elektronischen Lastrelais aufzunehmen. Um größere Umgebungstemperaturen zu kompensieren, sind zwischen den Kühlelementen dieser Halbleiterbauteile und dem Motorgehäuse Peltierelemente vorgesehen, die so ausgelegt und angeschlossen sind, daß ihre Kühlleistung proportional zum Motorstrom und damit zu den Verlusten ist.

Die Erfindung wird nachfolgend anhand der Zeichnung an Ausführungsbeispielen noch näher erläutert. Dabei zeigen:
- Fig. 1: eine schematische Anordnung von netzbetriebenen Elektromotoren mit einer zentralen Steuereinheit und
- Fig. 2: eine schematische Darstellung des Motoranschlußkastens einer der Elektromotore nach Figur 1.

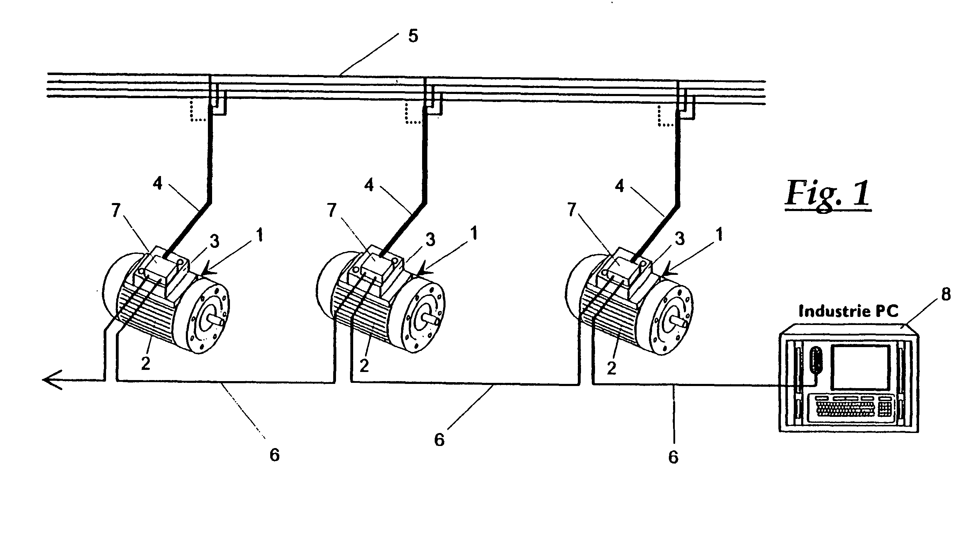

Im einzelnen erkennt man in Figur 1 drei Elektromotore 1, die in üblicher Weise zur Außenkühlung mittels eines integrierten Ventilators mit einem verrippten Motorgehäuse 2 ausgestattet sind. Außen am Motorgehäuse 2 sitzt bei jedem Motor 1 ein Motoranschlußkasten 3, in den als erstes je eine Energieversorgungsleitung 4 eingeführt ist. Über diese Energieversorgungsleitung 4 ist der jeweilige Motor 1 unmittelbar an das vorhandene Versorgungsnetz 5 angeschlossen, bei dem es sich üblicherweise um eine Dreiphasen-Drehstromnetz (TT-Netz oder TN-Netz) handelt.

Weiter ist in den Anschlußkasten 3 jedes Motors 1 eine Datenleitung 6 eingeführt, die mit einem Steuergerät 8 verbunden ist, welches durch einen Industrie-PC gebildet sein kann. Das Steuergerät 8 besorgt das Motormanagement, wozu im Motoranschlußkasten 3 jedes Motors 1 eine Motorschaltstufe 7 angeordnet ist. Diese Motorschaltstufe 7 umfaßt elektronische Lastrelais, über welche die einzelnen Wicklungsstränge in geeigneter Weise mit der jeweils erforderlichen Betriebsspannung versorgt werden können, wobei insbesondere eine Stern-Dreieck-Umschaltung, eine Schaltung für den Sanftanlauf und eine Überlastabschaltung vorgesehen ist. Entsprechend gibt es für die durch die Lastrelais gebildete Leistungsstufe eine Ansteuereinheit innerhalb der Motorschaltstufe 7 sowie eine Termistorschaltstufe, die für die Wärmeüberwachung jedes Motors 1, insbesondere zu dessen Überlastabschaltung, vorgesehen ist. Diese gesamte Motorschaltstufe 7 ist in baulicher Einheit im Motoranschlußkasten 3 dezentral an jedem der Motore 1 angeordnet. Lediglich die Steuerung der Motore 1 erfolgt zentral von dem Steuergerät 8 aus. Hierüber wird jeder Motor so angesteuert, daß er sich selbst die notwendige elektrische Energie über die Versorgungsleitung 4 unmittelbar aus dem Netz 5 holt.

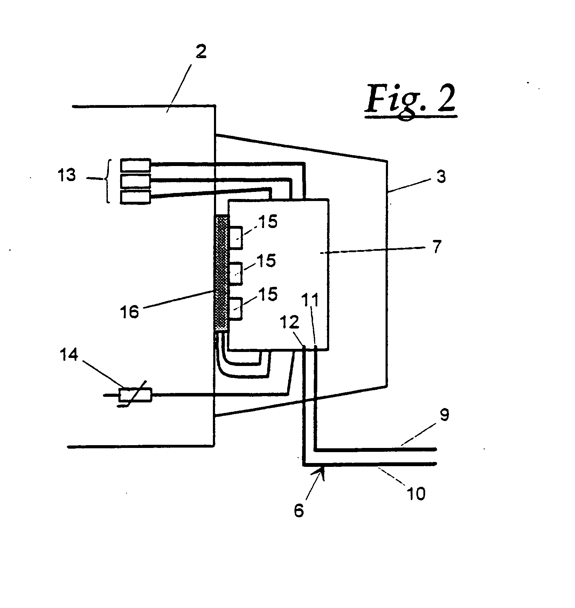

Wie Figur 2 deutlich macht, kann es sich bei der Datenleitung 6, über die der betreffende Motor 1 mit dem zentralen Steuergerät 8 verbunden ist, um eine einfache Zweidrahtleitung handeln, wobei für die eine der beiden Leitungen 9 ein Eingang 11 und für die andere Leitung 10 ein Ausgang 12 an der Motorschaltstufe 7 vorgesehen ist. Vornehmlich handelt es sich bei der Datenleitung 6 um ein Zweidraht-Bussystem, welches mit einem Busmaster verbunden ist, der in das zentrale Steuergerät 8 integriert ist. Die Datenleitung 6 kann gegebenenfalls über das Bussystem einen oder mehrere der Motore 1 mit dem zentralen Steuergerät 8 bidirektional verbinden, um eine Datenrückmeldung an das Steuergerät geben zu können. So kann das Steuergerät 8 Datenspeicher aufweisen, aus denen im Bedarfsfall die Betriebszustände eines oder mehrerer überwachter Motore 1 abgerufen werden können.

Figur 2 zeigt weiter die Motorwicklungen 13, die schematisch durch ihre Widerstände wiedergegeben sind und in der Motorschaltstufe 7 mit der Leistungsstufe verbunden sind. Deren elektronische Lastrelais weisen Halbleiterbauelemente 15 auf, die sich aufgrund der Strombelastung erwärmen und entsprechend mit Kühlelementen, wie verrippten Platten oder dergl., ausgerüstet sind. Um hier einen Temperaturausgleich vornehmen zu können, sind die Halbleiterbauteile 15 mit ihren Kühlelementen auf ein Peltierelement 16 aufgesetzt, welches auf dem Motorgehäuse 2 angeordnet ist. Das Peltierelement 16 wird mit einem Strom versorgt, der dem Motorstrom proportional ist, womit eine entsprechende, auf die Halbleiterbauteile 15 wirkende Kühlleistung zur Verfügung steht.

Weiter erkennt man in Figur 2 ein schematisch wiedergegebenes Thermoelement 14, von dem auch mehrere in die Motorwicklung 13 eingebunden sein können. Jedes dieser Thermoelemente 14 ist in der Motorschaltstufe 7 mit der daran integrierten Termistorstufe verbunden, womit sich zwischen der Temperaturmeßstelle und der Termistorstufe ein sehr kurzer Leitungsweg ergibt, dessen Widerstand praktisch vernachlässigbar ist.

## Patentansprüche

1. Netzbetriebener Elektromotor mit einem Motorgehäuse (2) und einem daran sitzenden Motoranschlußkasten (3), in dem zumindest eine Energieversorgungsleitung (4) sowie eine Datenleitung (6) zur Rückmeldung des Motorbetriebszustandes angeschlossen sind, ferner mit einer Motorschaltstufe (7), für Stern-Dreieckumschaltung, Sanftanlauf und/oder Überlastabschaltung, die im Motoranschlußkasten (3) angeordnet ist, wobei über die Datenleitung (6) zusätzlich die Steuersignale für die Motorschaltstufe (7) übertragen werden und die Energieversorgungsleitung (4) unmittelbar mit dem Netz verbunden ist,
**dadurch gekennzeichnet,**
**daß** die Motorschaltstufe (7) Halbleiterbauteile (15) mit Kühlelementen aufweist, zwischen denen und dem Motorgehäuse (2) zumindest ein Peltierelement (16) angeordnet ist, welches mit einem dem Motorstrom proportionalen Strom versorgt wird.

2. Netzbetriebener Elektromotor nach Anspruch 1,
**dadurch gekennzeichnet, daß** in die Wicklungen (13) des Motors (1) Thermoelemente (14) zur Temperaturüberwachung eingefügt sind, die mit der Motorschaltstufe (7) im Motoranschlußkasten (3) verbunden sind.

## Claims

1. Mains powered electric motor having a motor housing (2) and a motor connection box (3) arranged on it, in which at least one power supply line (4) and also a data line (6) for feedback of the motor operating state are connected, further having a motor switching stage (7), for star-delta switching, soft start and/or overload cutout, which is arranged in the motor connection box (3), whereby the control signals for the motor switching stage (7) are additionally transmitted via the data line (6) and the power supply line (4) is directly connected to the mains,
**characterised in that**
the motor switching stage (7) comprises semiconductor components (15) with cooling elements, between which and the motor housing (2) at least one Peltier element (16) is arranged which is supplied with a current proportional to the motor current.

2. Mains powered electric motor according to claim 1,
**characterised in that** thermo-elements (14) are incorporated into the windings (13) of the motor (1) for monitoring the temperature, said thermo-elements (14) being connected to the motor switching stage (7) in the motor connection box (3).

## Revendications

1. Moteur électrique alimenté par le secteur avec un carter de moteur (2) et une boîte de raccord du moteur (3) portée par celui-ci, dans laquelle sont raccordés au moins une conduite d'alimentation en énergie (4) ainsi qu'une ligne de transmission de données (6) pour la communication de l'état de fonctionnement du moteur, de plus avec un étage de commutation du moteur, pour commutation étoile-triangle, démarrage en douceur et / ou interruption de surcharge, qui est installé dans la boîte de raccord du moteur (3), les signaux de commande pour l'étage de commutation du moteur (7) étant en plus transmis par la ligne de transmission de données (6), et la conduite d'alimentation en énergie (4) étant reliée directement au secteur,
**caractérisé en ce que**
l'étage de commutation du moteur (7) présente des éléments à semi-conducteurs (15), entre lesquels et le carter du moteur (2) est agencé au moins un élément Peltier (16) qui est alimenté avec un courant proportionnel au courant du moteur.

2. Moteur électrique alimenté par le secteur selon la revendication 1,
**caractérisé en ce que**,
dans les bobinages (13) du moteur (1), sont insérés des thermo-éléments (14) pour le contrôle de la température, lesquels sont reliés à l'étage de commutation du moteur (7) dans la boîte de raccord du moteur (3).
